# EUROPÄISCHE PATENTSCHRIFT

(11) **EP 0 589 980 B1**
(45) Veröffentlichungstag und Bekanntmachung des Hinweises auf die Patenterteilung: **10.01.1996**
(21) Anmeldenummer: 92912348.7
(22) Anmeldetag: 12.06.1992
(51) Int. Cl.: A01F 11/02, A01D 45/06, D01B 1/14

(54) **VERFAHREN ZUM ENTHOLZEN VON FLACHS UND FLACHSAUFBEREITUNGSMASCHINE ZUR DURCHFÜHRUNG DIESES VERFAHRENS**
METHOD OF DECORTICATING FLAX, AND FLAX-PROCESSING MACHINE DESIGNED TO CARRY OUT THE METHOD
PROCEDE DE DECORTICAGE DU LIN ET MACHINE DE TRAITEMENT DU LIN UTILE POUR METTRE EN OEUVRE CE PROCEDE

(30) Priorität: 15.06.1991 DE 4119749
(43) Veröffentlichungstag der Anmeldung: 06.04.1994
(73) Patentinhaber: CLAAS OHG, D-33426 Harsewinkel (DE)
(72) Erfinder: SCHAAL, Walter, D-33428 Harsewinkel (DE); WEIGELT, Horst, D-4830 Güttersloh (DE)
(86) Internationale Anmeldenummer: DE9200488
(87) Internationale Veröffentlichungsnummer: WO9222690

(56) Entgegenhaltungen:
- EP-A- 0 230 276
- EP-A- 0 332 726
- EP-A- 0 398 421
- BE-A- 893 541
- DE-A- 3 030 475
- DE-A- 3 735 235
- DE-C- 3 639 022
- US-A- 3 982 548

## Beschreibung

Die Erfindung betrifft ein Verfahren und eine entsprechende Flachsaufbereitungsmaschine mit einer Brecheinrichtung zum Entholzen von Flachs.

Das Ernteverfahren der traditionellen Flachslinie für den textilen Bereich ist darauf ausgerichtet, maximale Faserlänge in Verbindung mit einer gleichmäßigen Faserlängenverteilung und Fasern in paralleler Anordnung zu erzielen. Für diese Qualitätsanforderungen ist der Verlauf der Tauröste der gerauften Pflanzen auf dem Feld und das Erkennen des richtigen Bergungszeitpunkts von entscheidender Bedeutung. Das Risiko eines Ernteverlustes ist groß und der mögliche Zeitraum für die Durchführung der Ernte, das sog. Erntefenster, ist außerordentlich kurz und infolge der Witterungsabhängigkeit des biologischen Prozesses der Tauröste im voraus nicht bestimmbar.

Die Parallelablage der gerauften Flachsstengel auf dem Feld sowie die Aufrechterhaltung dieser strengen Orientierung bei allen weiteren maschinellen Zwischenschritten auf dem Feld stellt ein weiteres markantes Merkmal der traditionellen Erntetechnik dar. Diese Parallelorientierung bedeutet eine beträchtliche Erschwerung der Materialhandhabung auf dem Feld. Sie war jedoch bisher nicht zu umgehen, und zwar nicht nur im Hinblick auf die Flachsweiterverarbeitung sondern auch wegen ihres Einflusses auf den Ablauf der Feldröste. Die gute Bodenlagerung und geringe Schichtdicke gewährleistete die Gleichmäßigkeit der Röste.

Nach der traditionellen Linie werden die Fasern selbst erst nach Bergung des Stengelmaterials in stationär durchgeführten Verfahren gewonnen. Da die Fasern höchstens 20 % des Stengelgewichts ausmachen, wurden also 80 % der Biomasse unnötig transportiert.

Aus der EP-A-0 332 726 ist eine selbstfahrende Flachserntemaschine bekannt, welche bereits eine Brecheinrichtung in Gestalt von vielen Brechwalzenpaaren enthält. Damit wird angestrebt, das Flachsstroh schon auf dem Feld wenigstens grob zu entholzen und die Holzbestandteile auf dem Feld zu verstreuen. Auch hierbei muß das Flachsstroh jedoch in geeigneter paralleler Ausrichtung der Brecheinrichtung übergeben werden. Wenn bei dieser bekannten Maschine ein Aufnehmerkopf zum Aufnehmen von wirr liegendem Ölleinstroh vorgesehen ist, so bedeutet dies, daß die wirren geknickten Stengel in der Maschine wieder in genau parallele Lage gebracht werden müssen.

Auch die DE-A-37 35 235 beschreibt eine Flachserntemaschine mit Brechvorrichtung für den verholzten Innenkern der Flachshalme. Auch hiernach werden die Halme der Brechvorrichtung geordnet und gleichmäßig zugeführt.

Andererseits gibt die EP-A-0 230 276 eine Drescheinrichtung für Getreide wieder, die in einem Mähdrescher eingebaut ist. Dieser bekannten Drescheinrichtung wird zwar das gemähte Erntegut als Gewirre zugeführt, was zu Dreschzwecken eine allgemein gebräuchliche Technik ist. Eine Drescheinrichtung, selbst wenn ihr, wie hier, eine im Axialfluß arbeitende Trenneinheit nachgeschaltet ist, eignet sich jedoch nicht zum Entholzen von Flachs.

Der Erfindung liegt die Aufgabe zugrunde, ein Entholzungverfahren für Flachs vorzuschlagen, das so wirksam ist, daß nach kürzerer Tauröste oder geringerer chemischer Vorbehandlung ein Entholzunggrad erreichbar ist, der die Vorstufe eines stationär arbeitenden modernen Faseraufschlußverfahrens bilden kann. Außerdem wird angestrebt, eine Maschine zur Durchführung dieses Verfahrens vorzuschlagen, die so kompakt ist, daß sie auch auf einem Fahrzeug untergebracht und während der Fahrt arbeiten kann.

Diese Aufgaben werden durch die Merkmale der Ansprüche 1 und 6 gelöst.

Dadurch wird das Ernteverfahren vereinfacht, weil der Brecheinrichtung nicht mehr parallel geordnete Stengel zugeführt werden, sondern ein Gewirre. Die Feldarbeit vor dem Entholzen, z. B. Mähen, Raufen, Wenden, Schwaden oder Dreschen kann mit üblichen landwirtschaftlichen Maschinen durchgeführt werden, wodurch die effektive Flächenleistung erheblich steigt. Die Verbesserung der Entholzung und vor allem deren Verlagerung in die Feldphase verringern das verbleibende Transport- und Lagervolumen für den Faserrohstoff. Auch das Problem des starken Staubanfalls in der ersten Stufe der stationären Weiterverarbeitung wird durch die bessere Entholzung erheblich reduziert.

Der Grundgedanke des vorgeschlagenen Verfahrens besteht darin, daß die Flachsstengel nicht nur durch gleichgeordnete Walzenpaare in immer der gleichen Richtung gezogen und gebrochen werden, sondern nach allen Richtungen, wie es der durchgehenden Verarbeitung in Wirrlage entspricht. Die Stengel durchlaufen hintereinander, wobei die Reihenfolge freibleiben kann, parallele Spalte eines Platinenkamms und den Umfangsspalt einer Trommelbrecheinrichtung. Hieran schließt sich eine axial arbeitende Feinbrech- und Faserreinigungseinrichtung an. Die Holzbestandteile, sog. Scheben, werden durch ständiges Reiben, Knicken und Schaben zermürbt und von den Faserbündeln abgelöst. Siebe bewirken die Abscheidung der Scheben und die Reinigung der Fasern, was im Endabschnitt der Bearbeitung durch Lockerung unterstützt wird. Das Verfahren kann stationär durchgeführt werden, bevorzugt wird jedoch eine gezogene oder selbstfahrende Maschine, von der die Holzbestandteile auf das Feld verstreut werden. Wird der Flachs ausnahmsweise nicht aus einer Wirrlage vom Feld aufgenommen, wo er eine wenigstens kurze Röstphase hinter sich gebracht hat, so kann er auch mit entsprechenden Aufnehmern gerauft oder gemäht und sofort anschließend entholzt werden, wenn eine geeignete Vorbehandlung des Bestandes stattgefunden hat. Die entholzten Fasern werden vorzugsweise zu großen Ballen verpreßt und in dieser Form zu den Lagerstätten der Weiterverarbeitungsanlagen transportiert.

Kernstück der vorgeschlagenen Flachsaufbereitungsmaschine sind zwei rotierende im Tangentialfluß arbeitende Brecher, deren parallele Achsen hintereinander angeordnet sind, und eine im Axialfluß arbeitende Feinbrech- und Faserreinigungseinrichtung.

Einer der Brecher hat einen Rotor aus in axialen Abständen angeordneten Sternscheiben und einem Platinenkamm aus entsprechend beabstandeten Platinen. Der Platinenkamm ist unter dem Rotor angeordnet und von Korbstäben durchsetzt, die vorzugsweise eine strukturierte Oberfläche nach Art von Armierungseisen für Beton haben. Die Korbstäbe bilden mit ihren engen Abständen einen gewölbten Siebboden, der nur einen geringen radialen Abstand zu den äußeren Kanten der Zacken der Sternscheiben hat, welche die Zwischenräume der Platinen durchlaufen. Die oberen Kanten der Platinen sind vorzugsweise flach bogenförmig eingebuchtet, wobei diese Bogenform mit der Form der vorauslaufenden Kanten der Zacken zusammenwirkt. Zweckmäßigerweise sind diese Kanten zurückfliehend gestaltet, beispielsweise mit 15 ° bezüglich eines die Kante querenden Radius.

Wenn so die Flachsstengel von den Zacken durch die Spalte gezogen werden, sollen sie an deren Seitenflächen reiben, wozu die Sternscheiben und die Platinen kantige Durchbrüche, Ein- und Ausbauchungen oder andere strukturierte Oberflächenbereiche aufweisen. Damit es nicht infolge der konstanten Drehzahl und einer regelmäßigen Anordnung der strukturierten Oberflächenstellen zu einer Ausrichtung des Materials kommt, das dann die Freiräume unbehindert passieren können, wird vorgeschlagen, daß zum einen die gegenseitigen Winkelstellungen der Sternscheiben und zum anderen die strukturierten Stellen auf den zur Verfügung stehenden Flächen stochastisch verteilt sind.

Der andere Brecher besteht vorschlagsgemäß aus einer Trommel mit einem geschlossenen zylindrischen Mantel, auf den Schlagleisten in achsparalleler Orientierung aufgesetzt sind. Diese Schlagtrommel arbeitet mit einem gewölbten Siebboden zusammen, der ebenfalls achsparallel orientierte Reibleisten aufweist. Auch diese Schlag- und Reibleisten können eine strukturierte Oberfläche haben. Um unterschiedliche Mengen ohne Stau verarbeiten zu können, wird vorgeschlagen, daß der Siebboden des Trommelbrechers hinsichtlich seines radialen Abstandes von der Trommel federnd und einstellbar angeordnet ist. Nach oben sollten beide Brecher durch tonnenförmige Gehäuse abgedeckt sein, die mit den Siebböden die Ein- bzw. Ausgänge bilden.

Nach dem Übergang vom ersten zum zweiten Brecher werden die Flachsstengel zwingend um eine Achse geknickt, die zu der vorhergehenden Biege- oder Knickachse senkrecht steht. Entsprechend erfolgt auch der Reib- und Schabeangriff in dem Trommelspalt an einer anderen Stelle des Stengelumfangs. Dies ist der entscheidende Grund dafür, daß die Stengel desorientiert zugeführt werden können und trotzdem eine wirkungsvolle, weil allseitige, Entholzung stattfindet.

Eine wesentliche Verbesserung kann ferner darin liegen, daß den Brechern je eine auswechselbare mehrkantige Brechleiste vorgeordnet ist, welche eine achsparallele Eintrittsschwelle darstellt. Wenn die Brecher einander unmittelbar nachgeschaltet sind, befindet sich die zweite Brechleiste an der Übergangsstelle von dem einen zum anderen. Die Stengel werden dann von dem Rotor des zweiten Brechers über diese Leiste gezogen. Noch wirkungsvoller ist indessen die erste Brechleiste, und es wird vorgeschlagen, unmittelbar vor derselben eine Einlege- und Rückhaltevorrichtung vorzusehen. Diese kann aus mindestens zwei Walzen bestehen, die mit Mitnehmern besetzt sind und unterschiedliche Umfangsgeschwindigkeiten haben.

Zur weiteren Verbesserung der Einzugsverhältnisse wird vorgeschlagen, daß der Einlege- und Rückhaltevorrichtung eine Fördereinrichtung mit Mitteln zum Strecken des aufgenommenen Gewirrs vorgeschaltet ist. Damit wird dieses nicht parallel geordnet, jedoch werden schon grobe Holzteile abgesprengt und das Ziehen über die Brechkante vorbereitet. Die Fördereinrichtung kann aus in einem Förderkanal angeordneten Kettenförderern bestehen, die mit unterschiedlichen, in Förderrichtung ansteigenden Geschwindigkeiten antreibbar sind. Der Boden des Förderkanals ist vorzugsweise geriffelt, gewellt oder in anderer geeigneter Weise strukturiert und mit Öffnungen versehen, damit schon hier Erdreste und grobe Holzteile abgeschieden werden können.

Die Feinbrech- und Faserreinigungseinrichtung schließt sich mit zu den Brechern senkrechter Achse an. Sie ist, und zwar der Rotor ebenso wie der Mantel, vorzugsweise in vier Abschnitte unterschiedlicher Länge gegliedert. Zunächst kommt ein Einzugsabschnitt. Hier ist der Rotor kegelförmig mit zunehmendem Rotordurchmesser in Flußrichtung. Er trägt insbesondere axialflächige Flügel mit achsparallelen Außenrändern und ist von einem Siebring umgeben, an dessen Innenfläche Leitleisten wendelförmig angeordnet sind.

Es folgt dann ein Feinbrechabschnitt mit zylindrischer, sich an den vorhergehenden Kegel anschließender Rotorform. Der Rotor trägt wendelförmig aufgesetzte Strukturleisten, welche eine besonders intensive Reibe- und Schabewirkung auf das an dieser Stelle schon teilentholzte Stengelmaterial ausüben sollen. Die Strukturleisten können A-förmig profilierte Blechprofile sein, wobei an den Flanken und am Kamm Durchbrüche, Ein- und Ausprägungen oder dergleichen vorgesehen sein können. Wesentlich ist, daß auch diese Profilierungen nach Art und Lage auf den Strukturleisten stochastisch verteilt sind.

Zweckmäßigerweise ist der Rotor von einem Siebfutter umgeben, d. h. von mehreren in Umfangsrichtung geteilten Siebsegmenten, die aufweitbar gehalten und geführt sind. Diese Segmente stehen mittels geeigneter mechanischer Elemente unter einer sie radial nach innen drückenden Kraft, die in Abhängigkeit vom Bremsmoment des betreffenden Rotorabschnitts steuerbar ist. Die bremsende Wirkung der Charge auf den Rotor ist an dieser Stelle besonders groß und sehr empfindlich abhängig von der aufgenommenen Menge. Durch entsprechende Lockerung der auf die Segmente ausgeübten Kraft kann somit auf ein gleichbleibendes Antriebsdrehmoment und gleichartige Bearbeitungsverhältnisse hingewirkt werden.

Danach folgt ein Lockerungsabschnitt. Hier wird der Rotor nach einem Durchmessersprung mit wesentlich kleinerem Durchmesser und zylindrischer Form weitergeführt. Auf dem Rotor sitzen in wendelförmiger Anordnung radiale Wurfzinken, welche die Fasern verwirbeln und lockern, so daß die Holzbestandteile herausfallen können. Der Rotor ist nach unten durch ein koaxiales zylindrisches Bodensieb abgeschlossen, das aus einem diagonalen Drahtgewebe besteht.

An seiner Innenseite sind teilwendelförmige Dralleisten angebracht. Darüber schließt sich über Schrägflächen ein breiter Wirbelraum an.

Nach der bevorzugten Ausführungsform schließt sich dann ein kurzer Auswurfabschnitt an. Der Rotor hat hier Wurfschaufeln, welche von Gehäuseteilen derart umgeben sind, daß die Fasern in radialer Richtung ausgeworfen werden.

Eine vorteilhafte Weiterbildung einer solchen Feinbrech- und Faserreinigungseinrichtung könnte darin bestehen, daß der Rotor insbesondere zwischen dem Feinbrech- und dem Lockerungsabschnitt geteilt ist und mit Hilfe einer Hohlwellenkonstruktion diese Teilrotoren mit unterschiedlichen Drehgeschwindigkeiten umlaufen. Zweckmäßigerweise hat der Wirbelbaum die höhere Drehgeschwindigkeit. Die Einrichtung braucht, wie erwähnt, nicht nur aus vier Abschnitten zu bestehen. Es können z. B. mehrere Feinbrech- und Lockerungsabschnitte abwechselnd aufeinander folgen. Statt einer einachsigen langgestreckten Einrichtung können auch zwei seriell arbeitende Einrichtungen parallel nebeneinander angeordnet sein, wobei dann die Flußrichtungen entgegengesetzt sind und eine Umlenkeinrichtung am Ende vorgesehen sein muß. Als Weiterbildung des Lockerungsabschnitts könnte ein Bremskamm seitlich oder von unten in das Bodensieb eingeschoben werden, durch dessen Zinken die Wurfzinken durchlaufen.

Um die Scheben, Stäube und Faserreste ordnungsgemäß zu entfernen, insbesondere auf dem Feld zu zerstreuen oder in Sonderfällen fraktioniert zu sammeln, werden vorzugsweise unter den Brechern und der Feinbrech- und Faserreinigungseinrichtung Austrageinrichtungen angebracht.

Um die ausgeworfenen Fasern einer Sammeleinrichtung zuführen zu können, wird eine dazu geeignete Übergabevorrichtung vorgeschlagen. Als Sammeleinrichtung eignet sich vorzugsweise eine Ballenpresse, und zwar insbesondere eine Stempelpresse mit geradem Preßkanal. Solche Ballenpressen sind für Stroh und Heu bekannt. Sie haben einen hohen Preßdruck, der bei dem gereinigten Fasermaterial in besonderem Maße gefordert ist, um eine nennenswerte Reduzierung des Transportvolumens zu erreichen.

Mit dem Ziel, eine erweiterungsfähige und den wechselnden Standortbedingungen anpaßbare Maschine zu schaffen, wird vorgeschlagen, daß wenigstens die zentralen Maschinenaggregate, nämlich die Brecher und die Feinbrech- und Faserreinigungseinrichtung in je eigenen Rahmengestellen eingebaut und dadurch als Module ausgebildet sind, welche in der Maschine leicht auswechselbar eingebaut sind. Diese Aggregate sind dadurch im Störungsfall auch leichter zugänglich oder zu ersetzen. Eine besonders vorteilhafte Lösung besteht darin, daß ein tunnelartiger, an beiden Enden zugänglicher Tragrahmen vorgesehen ist, in welchen die Module eingeführt werden können und in welchem sie in Reihenanordnung festlegbar sind. Es ist sogar sinnvoll, die Module mit Laufrollen in Laufschienen zu führen, insbesondere in oberen Laufschienen einzuhängen, die an beiden Enden überstehen, so daß ein Aggregat zur Inspektion herausgezogen werden kann.

Davon ausgehend besteht eine zweckmäßige Konstruktion darin, daß der Preßkanal einer Ballenpresse in Längsrichtung über dem Tragrahmen angeordnet ist. Die Übergabevorrichtung kann in diesem Fall aus einem Bandförderer bestehen, der über der Feinbrech- und Faserreinigungseinrichtung angeordnet ist und die nach oben ausgeworfenen Fasern aufnimmt. An einem Abnahmerechen am anderen Ende des Bandförderers staut sich dann das Fasergewölle auf und kann von dem Raffer der Ballenpresse übernommen und von unten in den Preßkanal hineingefördert werden.

Abschließend soll noch die Besonderheiten einer fahrbaren Flachsaufbereitungsmaschine angesprochen werden, wobei insbesondere an eine selbstfahrende Maschine gedacht ist. Diese Maschine kann einen üblichen Schwadaufnehmer haben. In diesem Falle wird davon ausgegangen, daß der Leinsamen vorher mittels eines normalen Mähdreschers geerntet worden ist. Angesichts des geringen Marktwerts dieser Ölsaat und möglicher zukünftiger samenarmer Sorten mag es aber auch zweckmäßig sein, den gemähten oder gerauften Flachs mittels einer dazu besonders geeigneten Maschine auf dem Feld zu verwirbeln und dadurch die Samen und gegebenenfalls Kapseln zu entfernen.

Es ist aber auch möglich, die Maschine zu einem Vollernter weiterzubilden und sie mit einem Flachsdreschwerk auszustatten, das im vorderen Bereich, jedenfalls der Einlege- und Rückhalteeinrichtung vorgeschaltet, beispielsweise auf dem Förderkanal, angeordnet sein könnte. Einem Dreschwerk müßte dann auch eine Siebreinigungsvorrichtung und ein Samentank mit Befüll- und Entleerungsmitteln zugeordnet sein. Ein solcher Vollernter kann eine Pick-Up-Einrichtung aufweisen und mit deren Hilfe den vorher gemähten oder gerauften und im Schwad abgelegten Flachs aufnehmen. Der Vollernter kann aber auch in den stehenden vorbehandelten Bestand einfahren und müßte dazu mit einer Raufvorrichtung oder einem Mähwerk ausgestattet sein. Das gedroschene Flachsstroh würde in jedem Falle dann unmittelbar weiterbearbeitet werden.

Im Hinblick auf das Gewicht einer so großen Maschine ist sie mit einem geeigneten Fahrwerk auszurüsten. In Betracht kommt neben einem Radfahrwerk mit Einzel- oder Tandemachsen vor allem ein Raupenfahrwerk oder ein Fahrwerk mit sogenannten Halbraupen, insbesondere mit Gummiraupenbändern, und lenkbaren Rädern. Das Fahrerhaus könnte auf den nach vorne überstehenden Laufschienen des Tragrahmens angeordnet sein.

Ein Auführungsbeispiel der Erfindung wird nachfolgend anhand der Zeichnung erläutert. Im einzelnen zeigt
- Fig. 1: eine Seitenansicht der gesamten Flachsaufbereitungsmaschine,
- Fig. 2: eine schematische räumliche Darstellung der für das Aufbereitungsverfahren wesentlichen Aggregate,
- Fig. 3: einen in einer Längsebene geführten Vertikalschnitt des mittleren Bereichs der Maschine nach Fig. 1 in größerem Maßstab,
- Fig. 4: Axialschnitte IV-IV gemäß Fig. 3 von zwei verschieden ausgeführten Sternscheiben-Zacken des ersten Brechers,
- Fig. 5: die Seitenansicht der in Fig. 3 dargestellten Schlagtrommel des zweiten Brechers,
- Fig. 6: einen Querschnitt VI-VI der Maschine nach Fig. 1 in größerem Maßstab,
- Fig. 7: einen Querschnitt VII-VII der Maschine nach Fig. 1,
- Fig. 8: einen Axialschnitt der Feinbrech- und Faserreinigungseinrichtung in größerem Maßstab,
- Fig. 9: eine räumliche Skizze einer der Strukturleisten des Rotors gemäß Fig. 8 im Feinbrechabschnitt,
- Fig. 10: einen Teilquerschnitt eines Siebsegments mit Reibleiste und des mit einer anderen Strukturleiste besetzten Rotors im gleichen Abschnitt und
- Fig. 11: eine schematische Skizze des im Durchmesser veränderbaren Siebfutters dieses Abschnitts der Feinbrecheinrichtung.

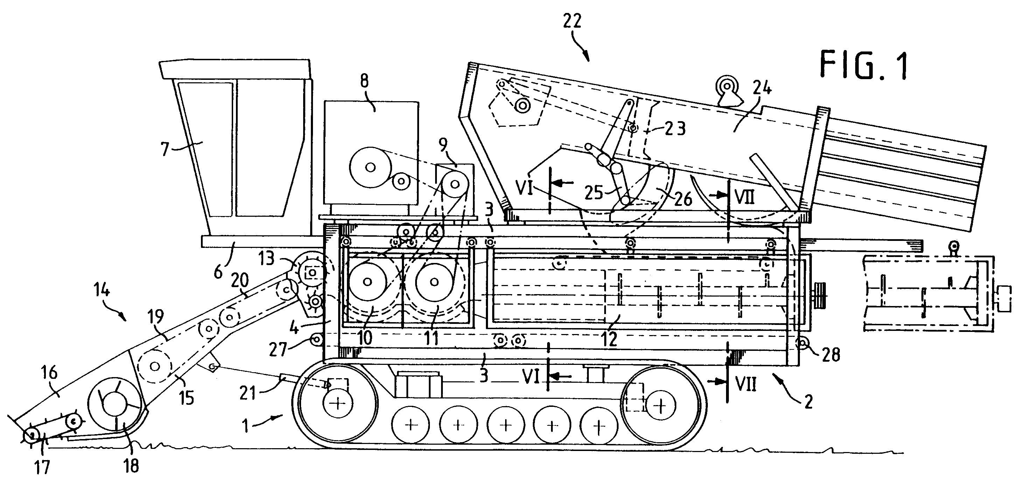

In Fig. 1 ist die selbstfahrende Flachsaufbereitungsmaschine in der Gesamtansicht dargestellt. Auf einem Fahrwerk, hier als Raupenfahrgestell 1 dargestellt, ist ein langgestreckter quadrischer Tragrahmen 2 aufgebaut aus je vier Längsträgern 3, vertikalen Pfosten 4 und Querträgern 5 (siehe auch Fig. 6). Zwei horizontale Laufschienen 6 erstrecken sich unmittelbar unter den oberen Längsträgern 3 und stehen vorne und hinten ein beträchtliches Stück über den Tragrahmen hinaus. Auf dem vorderen Überstand sitzt das Fahrerhaus 7. Dahinter befindet sich ein verbreitertes Podest mit dem Motor 8 und den Pumpen und anderen Hydraulikaggregaten 9 für die verschiedenen Einzelantriebe.

In den Tragrahmen 2 sind drei als Austauschmodule ausgebildete Aggregate eingefügt, nämlich ein Sternrotorbrecher 10, ein Trommelbrecher 11 und eine Feinbrech- und Faserreinigungseinrichtung 12. Diese Module können von vorne oder von hinten eingefügt werden. An der Rückseite ist die Feinbrech- und Faserreinigungseinrichtung 12 in ihrer teilweise herausgezogenen Stellung strichpunktiert angedeutet.

An der Vorderseite des Sternrotorbrechers 10 ist eine Einlege- und Rückhalteeinrichtung 13 angebaut und an dieser ein Aufnehmervorsatz 14 schwenkbar gelagert. Er umfaßt einen Förderkanal 15 und einen Aufnehmerkopf 16 für wirr auf dem Feld liegenden Flachs. Im einzelnen sind hierfür Kettenförderer 17 und eine Querförderschnecke 18 in der Aufnehmerwanne eingebaut. Im Förderkanal 15 befinden sich zwei Kettenförderer 19 und 20, von denen der obere 20 schneller umläuft als der untere, so daß die Matte geförderten Gutes gestreckt wird. Der Boden des Förderkanals 15 ist durch Erhebungen und Vertiefungen strukturiert und hat Öffnungen, so daß Erdreste und auch schon erste Holzteile ausfallen können. Mittels eines Stellzylinders 21 kann die Neigung des Aufnehmervorsatzes 14 verändert werden.

Oben auf den Tragrahmen 2 ist eine an sich bekannte Ballenpresse 22 aufgebaut, die mit einem kraftvollen kurbelgetriebenen Stempel 23 arbeitet. Der querschnittlich rechteckige Preßkanal 24 ist leicht nach hinten geneigt. Die gereinigten Fasern werden mittels eines Raffers 25 durch einen Ladekanal 26 von unten in den Preßkanal 24 eingebracht.

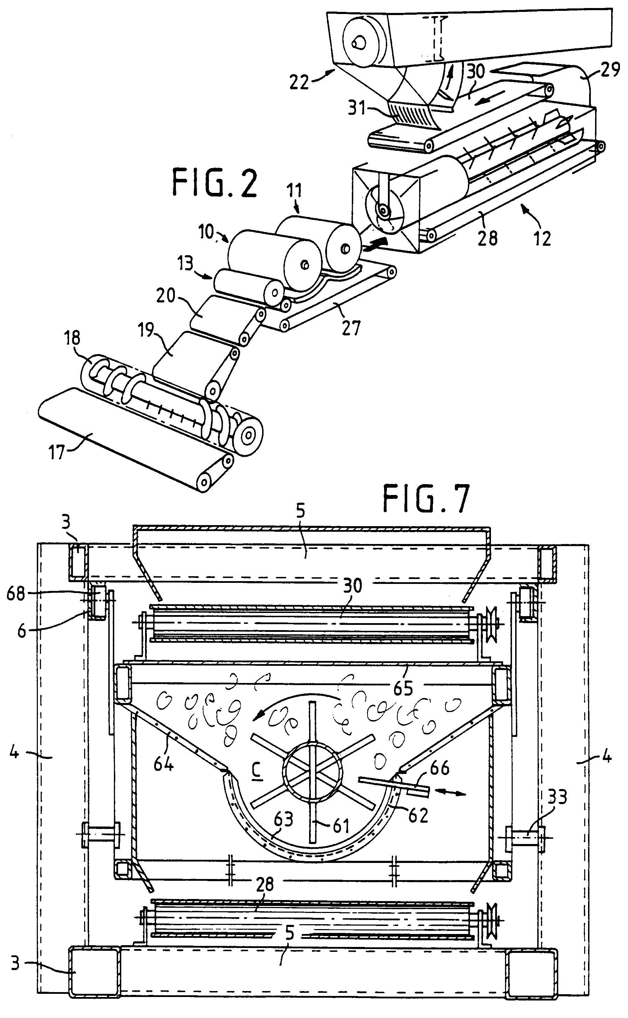

Fig. 2 macht den Materialfluß durch die einzelnen Aggregate deutlich. Das von den einzelnen Kettenförderern 17 aufgenommene wirr liegende Flachsstroh wird von der Querförderschnecke 18 zur Mitte geführt und wandert dann zwischen den Kettenförderern 19 und 20 und dem Boden des hier nicht dargestellten Förderkanals zu der Einlege- und Rückhalteeinrichtung 13. Nach diesem Vorreinigungs- und Streckprozeß folgt die erste Stufe der Entholzung in der im wesentlichen aus den beiden Brechern 10 und 11 bestehenden Brecheinrichtung, die im Tangentialfluß arbeitet. Sodann treten die schon teilentholzten Fasern in die im Axialfluß arbeitende Feinbrech- und Faserreinigungseinrichtung 12 ein, die im Beispiel einen langgestreckten Rotor aufweist. Dieser ist in zwei Abschnitte getrennt, wobei der hintere Abschnitt kleineren Durchmessers eine höhere Drehzahl hat. Unter den Brechern 10 und 11 sowie der Feinbrech- und Faserreinigungseinrichtung 12 befinden sich zwei Bandförderer 27 und 28, welche die abgeschiedenen Scheben, Stäube und Faserreste austragen. Hinten werden die gereinigten Fasern nach oben ausgeworfen und mittels eines gewölbten Umlenkschildes 29 nach vorne umgelenkt. Sie fallen dann auf einen Übergabebandförderer 30 und stauen sich weiter vorne an einem Abnahmerechen 31, der von oben auf die Förderbandfläche greift. Von hier nimmt der Raffer der Ballenpresse die Fasern auf. Die hinten ausgestoßenen Ballen, welche den Ernteertrag einer verhältnismäßig großen Fläche beinhalten, werden auf dem Feld abgelegt und dann unabhängig abtransportiert.

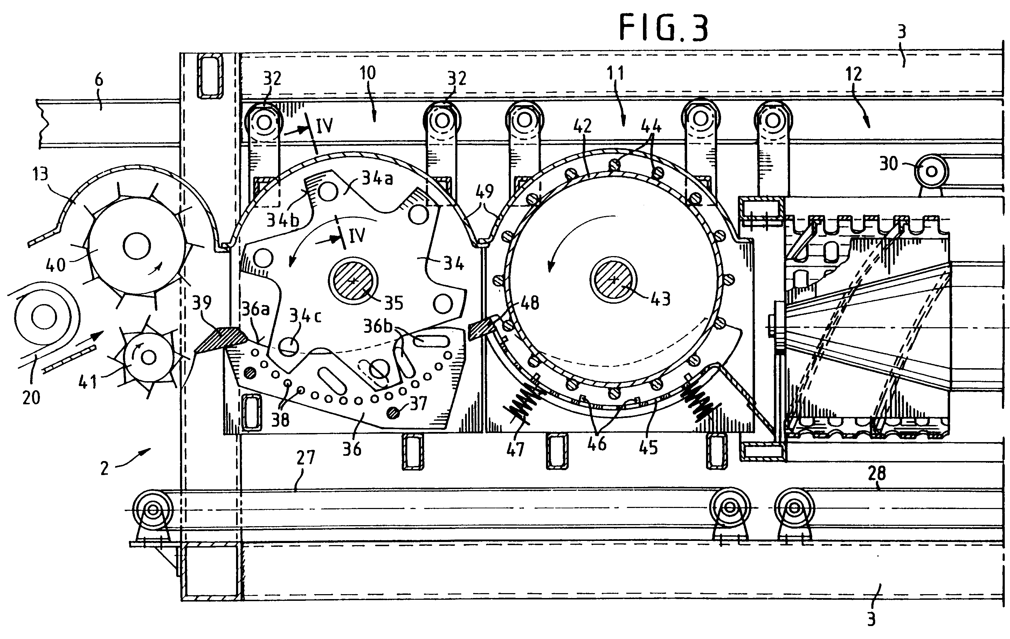

Anhand der Fig. 3 wird der Aufbau und die Wirkungsweise der Brecheinrichtung näher erläutert. Der als Modul ausgebildete Sternrotorbrecher 10 ist in einen entsprechend gestalteten stabilen Rahmen aus Vierkantrohr eingebaut und an vier Laufrollen 32 aufgehängt, die in den Laufschienen 6 geführt sind. Dadurch ist es außerordentlich einfach, an dieses zentrale Aggregat zu Inspektionszwecken heranzukommen. Nach Wegnahme des Aufnehmervorsatzes 14 kann dieser Modul einfach nach vorne unter das Fahrerhaus herausgezogen werden. Die sichere Befestigung in dem Tragrahmen 2 während des Betriebes bewirken besondere, in den Fig. 6 und 7 angedeutete Verriegelungsmittel 33.

Die wesentlichen zusammenwirkenden Teile des ersten Brechers 10 sind ein Sternscheibenrotor und ein Platinenkamm. Der Rotor umfaßt eine Anzahl von beispielsweise 14 Sternscheiben 34 von etwa 10 mm Dicke, die mit Abständen von wenigen Zentimetern auf einer Rotorwelle 35 befestigt sind. Die Sternscheiben haben trapezähnliche Zacken 34a mit einer in Pfeilrichtung vorauslaufenden Kante 34b, die gegenüber der radialen Richtung um etwa 15 ° zurückfliehend geneigt sind. Der Platinenkamm besteht aus einer der Anzahl der Sternscheiben angepaßten Anzahl von beispielsweise 15 Platinen 36 etwa gleicher Dicke und gleichen Abstandes. Sie sind mit Hilfe von Distanzhülsen und durchgehenden Spannbolzen 37 zusammengehalten. Der ganze Platinenkamm ist parallel zur Rotorachse und senkrecht zu den Platinen 36 von einem Kranz von Korbstäben 38 durchsetzt, die eine Oberflächenstruktur wie Armierungseisen für Beton haben und die zwischen den Platinen gebildeten Spalträume nach Art eines Siebbodens nach unten abschließen. Wichtig für die Wirkungsweise ist auch die Form der oberen Kante 36a der Platinen, welche hier flach eingebuchtet ist. Der Verlauf der Kanten 34b der Sternscheiben ist auf die Kante 36a abzustimmen.

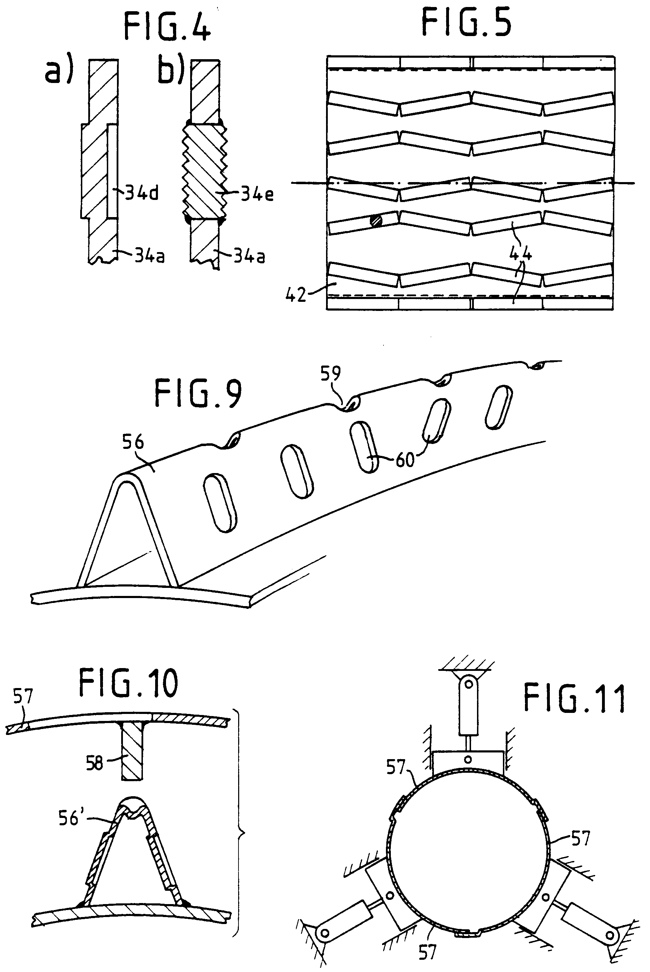

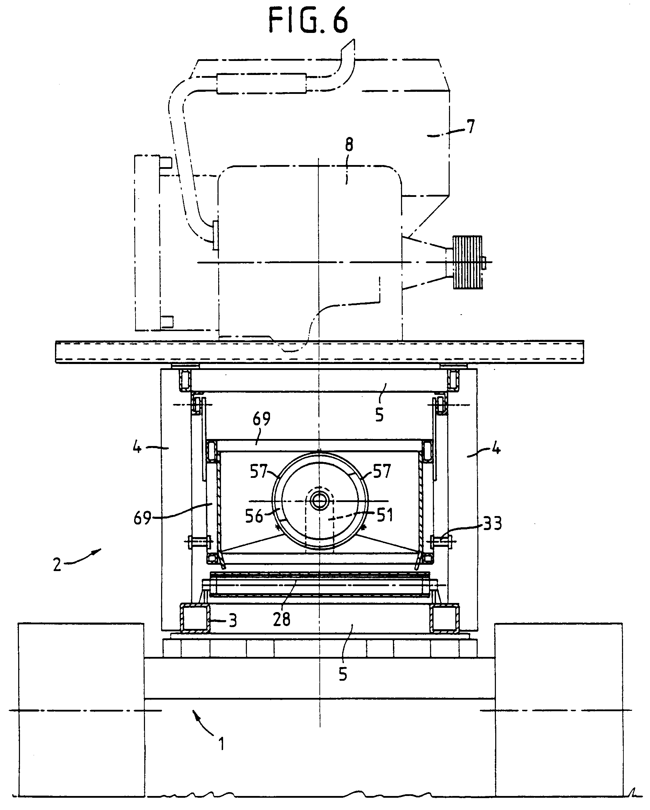

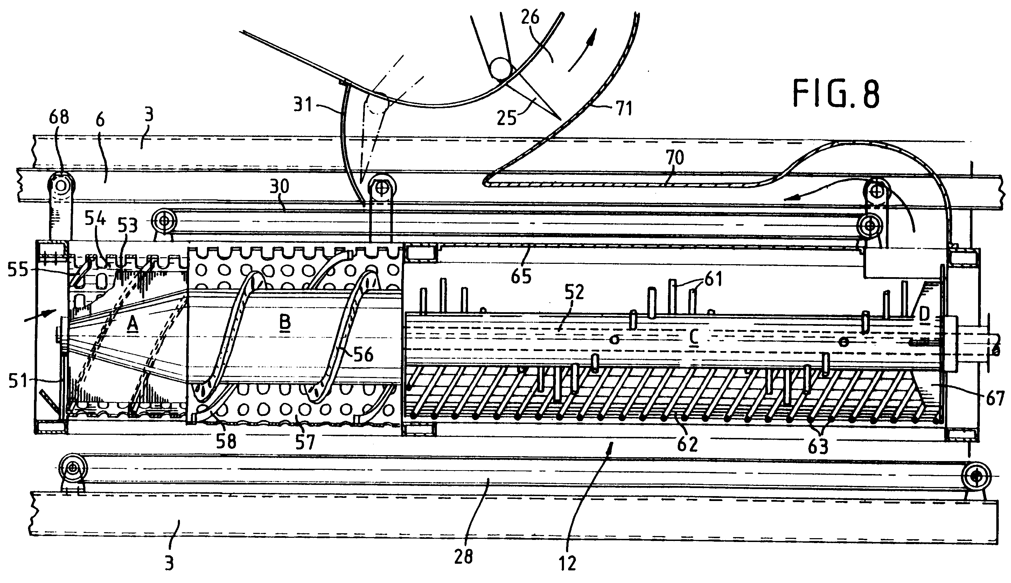

Die seitlichen Oberflächen sowohl der Zacken 34a als auch der Platinen 36 müssen strukturiert sein, um Kanten und Hindernisse abzugeben, an denen sich die Flachsstengel reiben können. Gemäß Fig. 3 haben die Zacken dazu einfache runde Löcher 34c und die Platinen Langlöcher 36b. Statt dessen könnten aber auch, wie Fig. 4a zeigt, diese Löcher nur teilweise durchgestanzt sein, so daß an einer Seite eine Vertiefung 34d und an der anderen Seite eine warzenartige Erhebung entsteht. Eine andere Alternative nach Fig. 4b besteht darin, diese plattenförmige Teile mit besonderen Reißelementen zu bestücken, z. B. Einsätze 34e ähnlicher Dicke ein- oder aufzusetzen, die eine fein und scharf geriffelte oder gezinkte Oberfläche haben und aus einem anderen Werkstoff bestehen. Die Verteilung dieser Strukturierungen auf der Fläche sollte zufallsbedingt (stochastisch) sein. Ebenso wichtig ist eine zufällige und damit unregelmäßige Winkeleinstellung der Sternscheiben 34 zueinander auf der Rotorwelle. Dadurch wird der Lauf ruhiger und die Wirkungsweise verbessert.

Die Eingangsschwelle dieses Aggregats bildet eine mit mehreren scharfen Kanten versehene auswechselbare Brechleiste 39, die sich parallel zur Rotorachse über den gesamten Platinenkamm erstreckt. Sie wirkt einerseits mit dem Sternscheibenrotor und andererseits mit der Einlege- und Rückhalteinrichtung 13 zusammen. Diese besteht aus zwei in entgegengesetzten Richtungen und mit unterschiedlichen Geschwindigkeiten umlaufenden Walzen 40 und 41. Sie sind mit Mitnehmern besetzt und übernehmen das Stengelmaterial von dem oberen Kettenförderer 20 der Streckeinrichtung. Da das Gut von den Mitnehmern der Walzen 40 und 41 fest- und mit der gegebenen Geschwindigkeit zurückgehalten wird, andererseits aber in den Wirkungsbereich der schnell rotierenden Sternscheiben 34 kommt, wird es kraftvoll über die Brechleiste 39 gezogen und dadurch geknickt und abgeschabt.

Das aus dem Brecher 10 nach schräg oben ausgeworfene Gut gelangt anschließend in den Trommelbrecher 11, der ebenfalls tangential arbeitet. Sein Trommelspalt ist jedoch zu den Spalten des Platinenkamms senkrecht orientiert und wirkt daher anders auf das zu bearbeitende Gut bzw. an einer anderen Stelle des einzelnen Stengels. Dadurch wird die Entholzungswirkung nachhaltig verbessert.

Die sog. Schlagtrommel 42, deren Welle mit 43 bezeichnet ist, hat einen geschlossenen Mantel und ist mit strukturierten Schlagleisten 44 besetzt, im Beispiel mit Stücken von Moniereisen, wie es im Stahlbetonbau verwendet wird. Fig. 5 zeigt die Schlagtrommel 42 von der Seite gesehen. Die Schlagleisten 44 sind in achsparalleler Orientierung, jedoch leicht zick-zack-förmig aufgeschweißt.

Die Schlagtrommel 42 arbeitet mit einem unten angesetzten gewölbten Siebboden 45 zusammen, der an der Innenseite vorstehende achsparallele Reibleisten 46 trägt bzw. mit entsprechend vorstehenden Kanten ausgebildet ist. Dieser Siebboden 45 ist mit Hilfe von Federelementen 47 federnd und einstellbar gelagert, so daß er nach unten zurückweichen kann. Er trägt ebenfalls eine auswechselbare Brechleiste 48 am Eingang des Trommelbrechers 11 bzw. an der Übergangsstelle zwischen den beiden Brechern. Sie hat die gleiche Wirkungsweise wie die Brechleiste 39.

Auch der Trommelbrecher 11 ist als Modul ausgebildet und an Laufrollen aufgehängt, mit deren Hilfe er an den ersten Brecher herangeschoben werden kann. Beide Brecher wie auch die obere Walze 40 der Einlege- und Rückhalteeinrichtung sind durch eigene gewölbte Gehäuse (z. B. 49) nach oben abgeschlossen. Unter der Brecheinrichtung erstreckt sich der horizontale Bandförderer 27 zum Austragen der durch die Siebe abgeschiedenen Holz- und Faserteile.

Von der Brecheinrichtung treten die schon weitgehend entholzten Fasern in die axial arbeitende Feinbrech- und Faserreinigungseinrichtung 12 ein. Diese wird nachfolgend anhand der Figuren 6, 7 und insbesondere Fig. 8 beschrieben. Dabei sind von links nach rechts vier Abschnitte zu unterscheiden, nämlich ein Einzugsabschnitt A, ein Feinbrechabschnitt B, ein Lockerungsabschnitt C und ein Auswurfabschnitt D. Der langgestreckte Rotor ist an der Eingangsseite auf einem Stehlager 51 gelagert. Der Antrieb befindet sich auf der rechten Seite beim Auswurfabschnitt D. Zwischen B und C ist der Rotor geteilt. Die Welle 52 des linken Rotorabschnitts erstreckt sich durch den rechten Rotorabschnitt hindurch, so daß der rechte Abschnitt mit einer höheren Drehzahl angetrieben werden kann. Unter der Einrichtung erstreckt sich, wie schon erwähnt, der Bandförderer 28 zum Ausbringen der Holz- und Faserbestandteile.

Im Einzugsabschnitt A ist der Rotor kegelförmig mit zunehmendem Durchmesser. Er trägt vier kreuzförmig in Axialflächen angeordnete Flügel 53 mit achsparalleler Außenkante, von denen einer abgebrochen dargestellt ist. Dieser Rotorabschnitt ist umgeben von einem feststehenden geschlossenen Siebring 54, der an der Innenseite mit wendelförmigen Drall- oder Leitleisten 55 besetzt ist. Diese bewirken zusammen mit den Flügeln 53, daß die Fasern eingezogen werden.

Der zylindrische Rotormantel großen Durchmessers im Abschnitt B ist mit wendelförmig angeordneten Strukturleisten 56 besetzt. Er ist umgeben von einem in Umfangsrichtung geteilten Siebfutter, dessen Segmente mit 57 bezeichnet sind. Diese Segmente tragen an der Innenseite teilwendelförmige Reibleisten 58, deren Steigung mit der Steigung der Strukturleisten 56 nicht übereinstimmt. Die Besonderheit dieses Feinbrechabschnitts B besteht darin, daß das schon verhältnismäßig feine Fasergewölle zwischen den Struktur- und Reibleisten gepreßt, durchgewalkt und gerieben wird. Dabei lösen sich trotz größter Schonung der Fasern weitere Holzbestandteile ab.

Die Form der Strukturleisten 56 ergibt sich insbesondere aus Fig. 9. Sie haben einen umgekehrt V-förmigen Querschnitt und am Kamm und an den Seiten Öffnungen 59 und 60. Dadurch ergeben sich scharfe Kanten. Die länglichen Öffnungen an den Seiten können senkrecht oder schräg zum Verlauf der Strukturleiste angebracht sein. Fig. 10 zeigt im Querschnitt eine andere Ausführungsform der Strukturleiste 56', wonach anstelle der Öffnungen nur Einprägungen vorgesehen sind. Diese Figur läßt auch die Form der Reibleisten 58 erkennen, die an den Siebfuttersegmenten 57 angebracht sind. Letztere wie auch der Siebring 54 des Abschnitts A haben Löcher von 3 cm Durchmesser.

Die Skizze nach Fig. 11 macht schematisch deutlich, daß die drei gezeigten Siebfuttersegmente 57 radial verstellbar sind. Sie werden von entsprechenden Gleitführungen aufgenommen und auf geeignete Weise, z. B. direkt mittels hydraulischer Stellzylinder bewegt. Sind in dem Mantelraum zwischen den Siebfuttersegmenten und dem Trommelmantel im Abschnitt B viel Fasern vorhanden, so ergeben diese ein beträchtliches Bremsmoment auf den Rotor, das bis zu einer unzulässigen Erhitzung der Fasern führen kann. Daher sind Vorkehrungen getroffen, um das Bremsmoment dieses Trommelabschnitts zu messen und dementsprechend durch steuernden Einfluß auf die Siebfuttersegmente den Anstau zu lösen, indem die Siebfuttersegmente 57 entsprechend nach außen gezogen werden. Durch diesen regelnden Einfluß kann die Arbeitsweise unabhängig vom Gutanfall optimiert werden.

Im anschließenden Lockerungsabschnitt C hat der schneller drehende Rotor einen kleineren Durchmesser. Er trägt radiale Wurfzinken 61 in Form von Stäben runden Querschnitts, die wendelförmig auf dem Rotor angeordnet sind. Nach unten ist der Rotor durch ein zylindrisches Bodensieb 62 aus diagonalem Drahtgewebe abgeschlossen, das an der Innenseite mit teilwendelförmigen Dralleisten 63 versehen ist. An das Bodensieb schließen sich Schrägsiebe 64 nach beiden Seiten an, welche einen breiten hohen Wirbelraum schaffen, der oben durch eine Decke 65 abgeschlossen ist. Durch das Lockern und Vervirbeln der Fasern in diesem Abschnitt C erfolgt eine wirkungsvolle Abscheidung der schon von den Fasern abgelösten Holzbestandteile, wobei sich das Fasergut langsam in Achsrichtung weiterbewegt. Um den Verwirbelungsvorgang beeinflussen zu können, ist es denkbar, einen Bremskamm 66 radial in das Bodensieb 62 einzuschieben. Auch die Stellung diese Bremskamms kann durch eine Regeleinrichtung beeinflußt werden.

Die Figuren 6 und 7 zeigen überzeugend die modulare Bauart auch dieser Feinbrech- und Faserreinigungseinrichtung 12. Die an Laufrollen 68 aufgehängten eigenen Rahmenelemente sind mit 69 bezeichnet.

Der Auswurfabschnitt D schließlich ist kurz. Eier sind Wurfschaufeln 67 auf dem Rotor vorgesehen, die infolge entsprechender Gehäuseform die Fasern nach oben auswerfen. Sie werden sodann durch den Umlenkschild 29 nach vorne gedrängt und fallen auf den Übergabebandförderer 30. Über dem Band ist, wie Fig. 7 zeigt, durch Seitenwände und eine Decke 70 ein Förderkanal gebildet. Die Decke 70 geht in den Boden 71 des Ladekanals 26 der Ballenpresse über. Eier beginnt ein Stauraum, der nach vorne durch einen auf die Förderbandoberfläche herabgreifenden Abnahmerechen 31 abgeschlossen wird. Das hier aufgestaute Fasergewölle wird vom Raffer 25 der Ballenpresse erfaßt und durch den Ladekanal 26 nach oben in den Preßkanal gefördert.

Es versteht sich von selbst, daß die beschriebene Faseraufbereitungsmaschine ohne den Aufnehmerkopf 16 auch stationär betrieben werden kann, wobei eher noch daran zu denken ist, sie auf Räder zu setzen und als Anhänger hin und wieder an einen anderen geeigneten Standort zu bringen. In diesem Fall wird das Flachsgewirr vom Feld mittels eines Ladewagens oder dergleichen aufgenommen und zu der in der Nähe aufgestellten Maschine transportiert.
- 1: Raupenfahrgestell
- 2: Tragrahmen
- 3: Längsträger
- 4: Pfosten
- 5: Querträger
- 6: Laufschiene
- 7: Fahrerhaus
- 8: Motor
- 9: Hydraulikaggregat
- 10: Sternrotorbrecher
- 11: Trommelbrecher
- 12: Feinbrech- und Faserreinigungseinrichtung
- 13: Einlege- und Rückhalteeinrichtung
- 14: Aufnehmervorsatz
- 15: Förderkanal
- 16: Aufnehmerkopf
- 17: Kettenförderer
- 18: Querförderschnecke
- 19: Kettenförderer
- 20: Kettenförderer
- 21: Stellzylinder
- 22: Ballenpresse
- 23: Stempel
- 24: Preßkanal
- 25: Raffer
- 26: Ladekanal
- 27: Bandförderer
- 28: Bandförderer
- 29: Umlenkschild
- 30: Übergabebandförderer
- 31: Abnahmerechen
- 32: Laufrolle
- 33: Verriegelungsmittel
- 34: Sternscheibe
- 34a: Zacke
- 34b: Kante
- 34c: Loch
- 34d: Vertiefung
- 34e: Einsatz
- 35: Rotorwelle
- 36: Platine
- 36a: Kante
- 36b: Langloch
- 37: Spannbolzen
- 38: Korbstab
- 39: Brechleiste
- 40: obere Walze
- 41: untere Walze
- 42: Schlagtrommel
- 43: Trommelwelle
- 44: Schlagleiste
- 45: Siebboden
- 46: Reibleiste
- 47: Federelement
- 48: Brechleiste
- 49: Gehäuse
- 51: Stehlager
- 52: Welle
- 53: Flügel
- 54: Siebring
- 55: Leitleiste
- 56: Strukturleiste
- 56': Strukturleiste
- 57: Siebfuttersegment
- 58: Reibleiste
- 59: Öffnung
- 60: Öffnung
- 61: Wurfzinken
- 62: Bodensieb
- 63: Dralleiste
- 64: Schrägsieb
- 65: Decke
- 66: Bremskamm
- 67: Wurfschaufel
- 68: Laufrolle
- 69: Rahmenelement
- 70: Decke
- 71: Ladekanalboden

## Patentansprüche

1. Verfahren zum Entholzen von Flachs, bei welchem der in Form eines Gewirres zugeförderte Flachs über Brechkanten (39, 48) gezogen, von Greiforganen (34a) durch ein System paralleler Spalte (36) bewegt und in tangentialer Richtung durch den Umfangsspalt einer Trommelbrecheinrichtung (11) gefördert wird, und daß die dabei weitgehend entholzten Fasern sodann in axialer Richtung eine Feinbrech- und Faserreinigungseinrichtung (12) mit einem langgestreckten Rotor durchwandern, und dabei in unterschiedlichen axialen Abschnitten (A, B, C, D) einer fördernden und lockernden Abscheide- und Reinigungsbehandlung unterzogen werden.

2. Verfahren nach Anspruch 1, dadurch gekennzeichnet, daß es mit einer selbstfahrenden Maschine auf dem Feld durchgeführt wird und die anfallenden Holzbestandteile auf das Feld verstreut werden.

3. Verfahren nach Anspruch 2, dadurch gekennzeichnet, daß der Flachs gerauft oder gemäht, getrocknet und anschließend entholzt wird.

4. Verfahren nach Anspruch 2, dadurch gekennzeichnet, daß der Flachs aus einer Wirrlage vom Feld aufgenommen wird.

5. Verfahren nach Anspruch 2, dadurch gekennzeichnet, daß die entholzten Fasern zu Ballen verpreßt werden.

6. Flachsaufbereitungsmaschine mit einer Einrichtung zum Entholzen von Flachs, vorzugsweise selbstfahrend, bei welcher wenigstens zwei im Tangentialfluß arbeitende rotierende Brecher (10, 11) mit parallelen Achsen und vorgeordneten Brechkanten vorgesehen sind, wobei der eine Brecher feststehende und rotierende plattenförmige Elemente aufweist, die miteinander parallele radiale Spalte bilden, und der andere Brecher feststehende und rotierende Reibwerkzeuge aufweist, die miteinander einen Umfangsspalt bilden, und daß den Brechern eine im Axialfluß arbeitende Feinbrech- und Faserreinigungseinrichtung (12) mit einem langgestreckten Rotor nachgeschaltet ist, die in unterschiedlichen axialen Abschnitten (A, B, C, D) mit fördernden und lockernden Abscheide- und Reinigungsmitteln ausgestaltet ist.

7. Flachsaufbereitungsmaschine nach Anspruch 6, dadurch gekennzeichnet, daß der eine Brecher (10) einen Rotor aus in axialen Abständen angeordneten Sternscheiben (34) aufweist, deren Zacken (34a) in die Zwischenräume eines aus entsprechend beabstandeten Platinen (36) bestehenden Platinenkammes eingreifen.

8. Flachsaufbereitungsmaschine nach Anspruch 7, dadurch gekennzeichnet, daß der Platinenkamm unter dem Rotor angeordnet und von Korbstäben (38) mit vorzugsweise strukturierter Oberfläche durchsetzt ist, die einen Siebboden bilden.

9. Flachsaufbereitungsmaschine nach Anspruch 7, dadurch gekennzeichnet, daß die oberen Kanten (36a) der Platinen, insbesondere im Eintrittsbereich der Zacken (34a), flach bogenförmig eingebuchtet sind und daß die vorauslaufenden Kanten (34b) der Zacken bezüglich der Umlaufrichtung zurückfliehend gestaltet sind.

10. Flachsaufbereitungsmaschine nach Anspruch 7, dadurch gekennzeichnet, daß die Sternscheiben (34) und die Platinen (36) kantige Durchbrüche (34c, 36b), Ein- und Ausbauchungen (34d) oder strukturierte Oberflächenbereiche (34e) aufweisen.

11. Flachsaufbereitungsmaschine nach Anspruch 7, dadurch gekennzeichnet, daß die Winkeleinstellung der Sternscheiben (34) auf der Rotorwelle (35) und/oder die Durchbrüche (34c, 36b) und Oberflächenstrukturen über die zur Verfügung stehenden Flächen stochastisch verteilt sind.

12. Flachsaufbereitungsmaschine nach Anspruch 6, dadurch gekennzeichnet, daß der andere Brecher (11) eine Trommel (42) mit einem geschlossenen zylindrischen Mantel, auf den Schlagleisten (44) in achsparalleler Orientierung aufgesetzt sind, sowie einen gewölbten Siebboden (45) mit ebenfalls etwa achsparallel orientierten Reibleisten (46) aufweist.

13. Flachsaufbereitungsmaschine nach Anspruch 12, dadurch gekennzeichnet, daß die Schlag- und/oder Reibleisten (44, 46) eine strukturierte Oberfläche haben.

14. Flachsaufbereitungsmaschine nach Anspruch 12, dadurch gekennzeichnet, daß der Siebboden (45) hinsichtlich seines radialen Abstandes von der Trommel (42) federnd (47) und einstellbar angeordnet ist.

15. Flachsaufbereitungsmaschine nach den Ansprüchen 8 und 12, dadurch gekennzeichnet, daß die Brecher durch tonnenförmige Gehäuse (49) nach oben abgedeckt sind und zwischen diesen und den Siebböden (38, 45) die Ein- bzw. Ausgänge gebildet sind.

16. Flachsaufbereitungsmaschine nach Anspruch 6, dadurch gekennzeichnet, daß den Brechern (10, 11) je eine auswechselbare mehrkantige Brechleiste (39, 48) vorgeordnet ist.

17. Flachsaufbereitungsmaschine nach Anspruch 6, dadurch gekennzeichnet, daß die Brecher (10, 11) einander vorzugsweise unmittelbar nachgeschaltet sind und am Eingang des ersten Brechers (10) eine Einlege- und Rückhalteeinrichtung (13) vorgesehen ist.

18. Flachsaufbereitungsmaschine nach Anspruch 17, dadurch gekennzeichnet, daß die Einlege- und Rückhalteeinrichtung (13) aus mindestens zwei mit unterschiedlichen Umfangsgeschwindigkeiten gegenläufigen, mit Mitnehmern besetzten Walzen (40, 41) besteht.

19. Flachsaufbereitungsmaschine nach Anspruch 17, dadurch gekennzeichnet, daß der Einlege- und Rückhaltevorrichtung (13) eine Fördereinrichtung mit Mitteln zum Strecken des aufgenommenen Gewirres vorgeschaltet ist.

20. Flachsaufbereitungsmaschine nach Anspruch 19, dadurch gekennzeichnet, daß die Fördereinrichtung aus mindestens zwei in einem Förderkanal (15) angeordneten Kettenförderern (19, 20) besteht, die mit unterschiedlichen, in Förderrichtung höheren Geschwindigkeiten antreibbar sind.

21. Flachsaufbereitungsmaschine nach Anspruch 20, dadurch gekennzeichnet, daß der Boden des Förderkanals strukturiert und mit Öffnungen versehen ist.

22. Flachsaufbereitungsmaschine nach Anspruch 6, dadurch gekennzeichnet, daß die Feinbrech- und Faserreinigungseinrichtung (12) sich in wenigstens vier Abschnitte unterschiedlicher Länge gliedert, nämlich in Flußrichtung
a) einen Einzugsabschnitt (A) mit zunehmendem Rotordurchmesser,
b) einen Feinbrechabschnitt (B) mit zylindrischer Rotorform größeren Durchmessers,
c) einen Lockerungsabschnitt (C) mit zylindrischer Rotorform kleineren Durchmessers und
d) einen kurzen Auswurfabschnitt (D).

23. Flachsaufbereitungsmaschine nach Anspruch 22, dadurch gekennzeichnet, daß der Rotor im Einzugsabschnitt (A) axialflächige Flügel (53) mit achsparallelen Außenrändern aufweist und von einem zylindrischen Siebring (54) umgeben ist, an dessen Innenfläche Leitleisten (55) wendelförmig angeordnet sind.

24. Flachsaufbereitungsmaschine nach Anspruch 22, dadurch gekennzeichnet, daß der Rotor im Feinbrechabschnitt (B) wendelförmig umlaufende Strukturleisten (56) aufweist und von einem in mehrere Umfangsegmente (57) geteilten, aufweitbar gehaltenen Siebfutter umgeben ist, an dessen Innenfläche Reibleisten (58) teilwendelförmig angeordnet sind.

25. Flachsaufbereitungsmaschine nach Anspruch 24, dadurch gekennzeichnet, daß der Siebring (54) und das Siebfutter (57) aus gelochtem Blech bestehen.

26. Flachsaufbereitungsmaschine nach Anspruch 24, dadurch gekennzeichnet, daß die Strukturleisten (56) A-förmig profilierte Blechprofile sind mit stochastisch verteilten Durchbrüchen (59, 60), Ein- und Ausprägungen, einer Riffelung oder dergleichen an den Flanken und am Kamm.

27. Flachsaufbereitungsmaschine nach Anspruch 24, dadurch gekennzeichnet, daß das Bremsmoment des betreffenden Rotorabschnitts (B) gemessen und in Abhängigkeit davon die auf die Siebfuttersegmente (57) wirkende Preßkraft gesteuert wird.

28. Flachsaufbereitungsmaschine nach Anspruch 22, dadurch gekennzeichnet, daß der Rotor im Lockerungsabschnitt (C) radiale, wendelförmig angeordnete Wurfzinken (61) aufweist und nach unten durch ein koaxiales zylindrisches Bodensieb (62) abgeschlossen ist, das aus einem diagonalen Drahtgewebe besteht, an dessen Innenseite teilwendelförmige Dralleisten (63) angebracht sind, und daß darüber ein nach oben erweiterter Wirbelraum vorgesehen ist.

29. Flachsaufbereitungsmaschine nach Anspruch 22, dadurch gekennzeichnet, daß der Rotor im abschließenden Auswurfabschnitt (D) Wurfschaufeln (67) aufweist, die von Gehäuseteilen umgeben sind und die Fasern in einer radialen Richtung aus der Vorrichtung (12) auswerfen.

30. Flachsaufbereitungsmaschine nach Anspruch 22, dadurch gekennzeichnet, daß der Rotor insbesondere zwischen dem Feinbrech- (B) und dem Lockerungsabschnitt (C) geteilt ist und die Teilrotoren mit unterschiedlichen Drehgeschwindigkeiten umlaufen.

31. Flachsaufbereitungsmaschine nach Anspruch 6, dadurch gekennzeichnet, daß die Feinbrech- und Faserreinigungsvorrichtung in parallel zueinander angeordnete seriell arbeitende Teilvorrichtungen geteilt ist.

32. Flachsaufbereitungsmaschine nach Anspruch 28, dadurch gekennzeichnet, daß ein Bremskamm (66), zwischen dessen Zinken die Wurfzinken (61) durchlaufen, radial in das Bodensieb (62) des Lockerungsabschnitts (C) einschiebbar angeordnet ist.

33. Flachsaufbereitungsmaschine nach Anspruch 6, dadurch gekennzeichnet, daß vorzugsweise unter den Brechern (10, 11) und der Feinbrech- und Faserreinigungseinrichtung (12) Austrageinrichtungen (27, 28) für die anfallenden Scheben, Stäube und Faserreste vorgesehen sind.

34. Flachsaufbereitungsmaschine nach Anspruch 6, dadurch gekennzeichnet, daß sich an die Feinbrech- und Faserreinigungseinrichtung (12) eine Übergabevorrichtung (29, 30, 70) anschließt, welche die ausgeworfenen Fasern einer Sammeleinrichtung zuführt.

35. Flachsaufbereitungsmaschine nach Anspruch 34, dadurch gekennzeichnet, daß die Sammeleinrichtung eine Ballenpresse (22), insbesondere Stempelpresse mit geradem Preßkanal, ist.

36. Flachsaufbereitungsmaschine nach Anspruch 6, dadurch gekennzeichnet, daß wenigstens die Brecher (10, 11) und die Feinbrech- und Faserreinigungseinrichtung (12) in je eigenen Rahmengestellen (69) eingebaut und dadurch als Module ausgebildet sind und daß diese in der Maschine leicht auswechselbar festgelegt sind.

37. Flachsaufbereitungsmaschine nach Anspruch 36, dadurch gekennzeichnet, daß ein tunnelartiger, an beiden Enden zugänglicher Tragrahmen (2) vorgesehen ist, in welchen die Module eingeführt werden können und in welchem sie in Reihenanordnung festlegbar (33) sind.

38. Flachsaufbereitungsmaschine nach Anspruch 37, dadurch gekennzeichnet, daß der Preßkanal (24) einer Ballenpresse (22) in Längsrichtung über dem Tragrahmen (2) angeordnet und in bekannter Weise einen an der Unterseite mündenden Ladekanal (26) aufweist, daß die Übergabevorrichtung einen über der Feinbrech- und Faserreinigungseinrichtung (12) angeordneten Bandförderer (30) umfaßt, der die nach oben ausgeworfenen Fasern aufnimmt und an einem Abnahmerechen (31) aufstaut, und daß der Abnahmerechen (31) am Eingang des Ladekanals (26) im Bereich des Raffers (25) angeordnet ist.

39. Flachsaufbereitungsmaschine nach Anspruch 37, dadurch gekennzeichnet, daß die Module in oberen, an beiden Enden überstehenden Laufschienen (6) eingehängt sind.

40. Fahrbare Flachsaufbereitungsmaschine nach einem der vorhergehenden Ansprüche, dadurch gekennzeichnet, daß ein Schwadaufnehmer (16), eine Raufvorrichtung oder ein Mähwerk vorgesehen ist.

41. Fahrbare Flachsaufbereitungsmaschine nach Anspruch 40, dadurch gekennzeichnet, daß an einer jedenfalls der Einlegeund Rückhalteeinrichtung (13) in Flußrichtung vorgeordneten Stelle ein Flachsdreschwerk vorgesehen ist.

42. Fahrbare Flachsaufbereitungsmaschine nach Anspruch 41, dadurch gekennzeichnet, daß dem Dreschwerk eine Siebreinigungsvorrichtung und ein Samentank mit Befüll- und Entleerungsmitteln zugeordnet ist.

43. Fahrbare Flachsaufbereitungsmaschine nach Anspruch 40, dadurch gekennzeichnet, daß ein angetriebenes Fahrwerk (1) vorgesehen ist.

44. Fahrbare Flachsaufbereitungsmaschine nach Anspruch 40, dadurch gekennzeichnet, daß das Fahrerhaus (7) auf den nach vorn überstehenden Laufschienen (6) des Tragrahmens (2) angeordnet ist.

## Claims

1. Method of decorticating flax, in which the flax fed in the form of a tangled mass is pulled over breaking edges (39, 48), moved by gripping elements (34a) through a system of parallel slots (36) and conveyed in a tangential direction through the peripheral gap of a drum breaking device (11), and in which the fibres thereby largely decorticated then travel in the axial direction through a fine breaking and fibre cleaning device (12) having an elongated rotor, and are thereby subjected, in different axial sections (A, B, C, D), to a conveying and loosening separating and cleaning treatment.

2. Method according to Claim 1, characterized in that it is carried out with a self-propelled machine in the field, the wood components thus produced being scattered over the field.

3. Method according to Claim 2, characterized in that the flax is pulled or mown, dried and then decorticated.

4. Method according to Claim 2, characterized in that the flax is picked up from a tangled mass on the field.

5. Method according to Claim 2, characterized in that the decorticated fibres are pressed into bales.

6. Flax dressing machine having a device for decorticating flax, preferably of the self-propelled type, in which at least two rotating breakers (10, 11) which work with tangential flow and have parallel axes and upstream breaking edges are provided, the one breaker having fixed and rotating plate-shaped elements which form parallel radial slots with one another, and for the other breaker having fixed and rotating rubbing implements which form a circumferential slot with one another, and in which the breakers are followed downstream by a fine breaking and fiber cleaning device (12) which work with axial flow and have an eleongated rotor, which device is designed in different axial sections (A, B, C, D) with conveying and loosening separating and cleaning treatment.

7. Flax dressing machine according to Claim 6, characterized in that one breaker (10) has a rotor composed of star wheels (34) which are arranged at axial intervals and whose prongs (34a) engage in the gaps of a plate comb consisting of correspondingly spaced plates (36).

8. Flax dressing machine according to Claim 7, characterized in that the plate comb is arranged under the rotor and cage rods (38) having a preferably structured surface and forming a sieve bottom pass through said plate comb.

9. Flax dressing machine according to Claim 7, characterized in that the top edges (36a) of the plates, particularly in the inlet region of the prongs (34a), have flat, curved indentations and the leading edges (34b) of the prongs have a shape receding in relation to the direction of rotation.

10. Flax dressing machine according to Claim 7, characterized in that the star wheels (34) and the plates (36) have edged holes (34c, 36b), indentations and bulges (34d) or structured surface regions (34e).

11. Flax dressing machine according to Claim 7, characterized in that the angular adjustment of the star wheels (34) on the rotor shaft (35) and/or the holes (34c, 36b) and surface structures are distributed at random over the available surfaces.

12. Flax dressing machine according to Claim 6, characterized in that the other breaker (11) comprises a drum (42) having a closed cylindrical peripheral wall on which beating bars (44) are attached with an axially parallel orientation, and also an arched sieve bottom (45) having rubbing bars (46) likewise with an approximately axially parallel orientation.

13. Flax dressing machine according to Claim 12, characterized in that the beating bars (44) and/or rubbing bars (44, 46) have a structured surface.

14. Flax dressing machine according to Claim 12, characterized in that the sieve bottom (45) is mounted resiliently (47) and adjustably in respect of its radial distance from the drum (42).

15. Flax dressing machine according to Claims 8 and 12, characterized in that the breakers are covered at the top by barrel-shaped casings (49) and the inlets and outlets respectively are formed between said casings and the sieve bottoms (38, 45).

16. Flax dressing machine according to Claim 6, characterized in that an exchangeable multi-edged breaking bar (39, 48) is disposed upstream of each of the breakers (10, 11).

17. Flax dressing machine according to Claim 6, characterized in that the breakers (10, 11) are disposed preferably directly one behind the other and an insertion and retention device (13) is provided at the inlet of the first breaker (10).

18. Flax dressing machine according to Claim 17, characterized in that the insertion and retention device (13) consists of at least two rollers (40, 41) which rotate at different peripheral speeds in opposite directions and are equipped with drivers.

19. Flax dressing machine according to Claim 17, characterized in that a conveyor device having means of stretching the tangled mass picked up is connected upstream of the insertion and retention device (13).

20. Flax dressing machine according to Claim 19, characterized in that the conveyor device consists of at least two chain conveyors (19, 20) arranged in a conveyor channel (15) and capable of being driven at different speeds which are higher in the conveying direction.

21. Flax dressing machine according to Claim 20, characterized in that the bottom of the conveyor channel is structured and provided with openings.

22. Flax dressing machine according to Claim 6, characterized in that the fine breaking and fibre cleaning device (12) is divided into at least four sections of different lengths, namely, in the direction of flow:
a) an intake section (A) having an increasing rotor diameter,
b) a fine breaking section (B) having a cylindrical rotor shape of larger diameter,
c) a loosening section (C) having a cylindrical rotor shape of smaller diameter, and
d) a short ejection section (D).

23. Flax dressing machine according to Claim 22, characterized in that the rotor in the intake section (A) has blades (53) arranged in axial planes and having axially parallel outer edges and is surrounded by a cylindrical sieve ring (54) on the inner surface of which guide bars (55) are arranged in a spiral.

24. Flax dressing machine according to Claim 22, characterized in that the rotor in the fine breaking section (B) has structured bars (56) extending spirally around it and is surrounded by a sieve lining which is divided into a plurality of peripheral segments (57) and is held in such a manner that it can be expanded and on the inner surface of which rubbing bars (58) in the form of partial spirals are disposed.

25. Flax dressing machine according to Claim 24, characterized in that the sieve ring (54) and the sieve lining (57) are composed of perforated sheet metal.

26. Flax dressing machine according to Claim 24, characterized in that the structured bars (56) are A-shaped sheet metal sections having randomly distributed openings (59, 60), impressions and embossing, grooving or the like on the flanks and on the crest.

27. Flax dressing machine according to Claim 24, characterized in that the braking moment of the respective rotor section (B) is measured and in dependence thereon the pressing force acting on the sieve lining segments (57) is controlled.

28. Flax dressing machine according to Claim 22, characterized in that the rotor in the loosening section (C) has radial, spirally arranged thrower prongs (61) and at the bottom is closed by a coaxial cylindrical bottom sieve (62) which consists of diagonal wire fabric and on whose inner side swirling bars (63) of partially spiral shape are disposed, while thereabove an upwardly widened vortex chamber is provided.

29. Flax dressing machine according to Claim 22, characterized in that the rotor in the end ejection section (D) has thrower blades (67) which are surrounded by casing parts and eject the fibres in a radial direction out of the device (12).

30. Flax dressing machine according to Claim 22, characterized in that the rotor is divided in particular between the fine breaking section (B) and the loosening section (C) and the partial rotors rotate at different speeds.

31. Flax dressing machine according to Claim 6, characterized in that the fine breaking and fibre cleaning device is divided into partial devices disposed parallel to one another and working serially.

32. Flax dressing machine according to Claim 28, characterized in that a brake comb (66), between the prongs of which the thrower prongs (61) pass through, is arranged for insertion radially into the bottom sieve (62) of the loosening section (C).

33. Flax dressing machine according to Claim 6, characterized in that discharge devices (27, 28) for the shives, dust and fibres produced are provided, preferably under the breakers (10, 11) and the fine breaking and fibre cleaning device (12).

34. Flax dressing machine according to Claim 6, characterized in that a transfer device (29, 30, 70) which feeds the ejected fibres to a collecting device adjoins the fine breaking and fibre cleaning device (12).

35. Flax dressing machine according to Claim 34, characterized in that the collecting device is a bale press (22), particularly a plunger press having a straight baling channel.

36. Flax dressing machine according to Claim 6, characterized in that at least the breakers (10, 11) and the fine breaking and fibre cleaning device (12) are each installed in their own frame element (69) and thus are in the form of modules, which are fastened in the machine in such a manner as to be easily exchangeable.

37. Flax dressing machine according to Claim 36, characterized in that a tunnel-like carrier frame 2 accessible at both ends is provided, into which the modules can be inserted and in which they can be fastened (33) in a serial arrangement.

38. Flax dressing machine according to Claim 37, characterized in that the baling channel (24) of a bale press (22) is arranged in the longitudinal direction above the carrier frame (2) and in known manner has a loading channel (26) leading in at the bottom; in that the transfer device comprises a belt conveyor (30) which is disposed above the fine breaking and fibre cleaning device (12) and which picks up the fibres ejected in the upward direction and accumulates them against a discharge comb (31); and in that the discharge comb (31) is disposed in the region of the gatherer (25) at the inlet of the loading channel (26).

39. Flax dressing machine according to Claim 37, characterized in that the modules are suspended in overhead running rails (6) projecting at both ends.

40. Travelling flax dressing machine as claimed in one of the preceding claims, characterized in that a windrow pick-up head (16) and a pulling device or a mowing unit are provided.

41. Travelling flax dressing machine according to Claim 40, characterized in that a flax threshing unit is provided in a position which in any case lies upstream, in the direction of flow, of the insertion and retention device (13).

42. Travelling flax dressing machine according to Claim 41, characterized in that a sieve cleaning device and a seed tank having filling and emptying means are associated with the threshing unit.

43. Travelling flax dressing machine according to Claim 40, characterized in that a driven undercarriage (1) is provided.

44. Travelling flax dressing machine according to Claim 40, characterized in that the driver's cab (7) is disposed on the running rails (6) of the carrier frame (2) which project forwards.

## Revendications

1. Procédé de décorticage du lin, dans lequel le lin transporté sous la forme d'un emmêlement est étiré pardessus des crêtes de concassage (39, 48), déplacé par des organes de préhension (34a) à travers un système de fentes parallèles (36) et acheminé tangentiellement à travers la fente périphérique d'un dispositif de concassage à tambour (11) et dans lequel les fibres alors largement décortiquées traversent ensuite axialement un dispositif de concassage fin et de nettoyage des fibres (12) comprenant un long rotor et sont alors soumises dans diverses sections axiales (A, B, C, D) à un traitement de séparation et de nettoyage opérant par transport et relâchement.

2. Procédé suivant la revendication 1, caractérisé en ce qu'il est mis en oeuvre par une machine automotrice sur le champ et les parties ligneuses qui en résultent sont éparpillées sur le champ.

3. Procédé suivant la revendication 2, caractérisé en ce que le lin est arraché ou fauché, séché et ensuite décortiqué.

4. Procédé suivant la revendication 2, caractérisé en ce que le lin est ramassé sur le champ dans un état emmêlé.

5. Procédé suivant la revendication 2, caractérisé en ce que les fibres décortiquées sont comprimées en balles.

6. Machine de traitement du lin à dispositif de décorticage du lin, de préférence automotrice, dans laquelle au moins deux concasseurs tournants (10, 11) opérant dans le flux tangentiel, possèdent des axes parallèles et des arêtes de concassage placés à l'entrée, étant entendu que le premier concasseur présente des éléments en forme de plaques fixes et tournantes, qui forment des fentes radiales parallèles, et l'autre concasseur présente des outils de friction fixes et tournants, qui forment une fente périphérique, et dans laquelle, en aval des concasseurs, se trouve un dispositif de concassage fin et de nettoyage des fibres (12) opérant dans le flux axial, comprenant un long rotor, qui est équipé dans diverses sections axiales (A, B, C, D) de moyens de nettoyage et de séparation qui transportent et relâchent les fibres.

7. Machine de traitement du lin suivant la revendication 6, caractérisée en ce que le premier concasseur (10) présente un rotor comprenant des disques en étoile (34) espacés le long de l'axe, dont les dents (34a) agissent dans les espaces de séparation d'un peigne à platines comprenant des platines (36) espacées de manière correspondante.

8. Machine de traitement du lin suivant la revendication 7, caractérisée en ce que le peigne à platines est disposé sous le rotor et est traversé par des barres de grille (38), de préférence, à surface structurée, qui forment un fond de criblage.

9. Machine de traitement du lin suivant la revendication 7, caractérisée en ce que les bords supérieurs (36a) des platines, en particulier dans la zone d'entrée des dents (34a), sont incurvés suivant un arc peu profond et les bords d'attaque (34b) des dents sont formés fuyant dans un sens opposé au sens de rotation.

10. Machine de traitement du lin suivant la revendication 7, caractérisée en ce que les disques en étoile (34) et les platines (36) présentent des ouvertures à bords vifs (34c, 36b), des creux et des bossages (34d) ou des zones de surface structurée (34e).

11. Machine de traitement du lin suivant la revendication 7, caractérisée en ce que le réglage angulaire des disques en étoile (34) sur l'arbre de rotor (35) et/ou les ouvertures (34c, 36b), ainsi que les structures superficielles sont répartis au hasard sur les surfaces se trouvant à disposition.

12. Machine de traitement du lin suivant la revendication 6, caractérisée en ce que l'autre concasseur (11) présente un tambour (42) à enveloppe cylindrique fermée, sur lequel des lattes de battage (44) sont montées parallèlement à l'axe, ainsi qu'un fond perforé de criblage courbe (45) avec des lattes de friction (46) également presque parallèles à l'axe.

13. Machine de traitement du lin suivant la revendication 12, caractérisée en ce que les lattes de battage et/ou de friction (44, 46) ont une surface structurée.

14. Machine de traitement du lin suivant la revendication 12, caractérisée en ce que le fond de criblage (45) est, en ce qui concerne son éloignement radial du tambour (42), monté sur ressorts (47) et de manière réglable.

15. Machine de traitement du lin suivant les revendications 8 et 12, caractérisée en ce que les concasseurs sont recouverts vers le haut par des carters en forme de tonneaux (49) et entre ces carters et les fonds de criblage (38, 45) sont formées les entrées et les sorties.

16. Machine de traitement du lin suivant la revendication 6, caractérisée en ce qu'une barre de concassage (39, 48) polygonale remplaçable est à chaque fois placée à l'entrée des concasseurs (10, 11).

17. Machine de traitement du lin suivant la revendication 6, caractérisée en ce que les concasseurs (10, 11) se suivent l'un l'autre, de préférence directement et à l'entrée du premier concasseur (10) se trouve un dispositif de chargement et de retenue (13).

18. Machine de traitement du lin suivant la revendication 17, caractérisée en ce que le dispositif de chargement et de retenue (13) se compose d'au moins deux cylindres (40, 41) garnis d'organes entraîneurs et tournant en sens contraires à des vitesses de rotation différentes.

19. Machine de traitement du lin suivant la revendication 17, caractérisée en ce que le dispositif de chargement et de retenue (13) est précédé d'un dispositif de transport comprenant des moyens pour étirer l'emmêlement ramassé.

20. Machine de traitement du lin suivant la revendication 19, caractérisée en ce que le dispositif de transport se compose d'au moins deux transporteurs à chaînes (19, 20) agencés dans un conduit de transport (15), qui peuvent être entraînés à des vitesses différentes, croissant dans la direction de transport.

21. Machine de traitement du lin suivant la revendication 20, caractérisée en ce que le fond du conduit de transport est structuré et comprend des orifices.

22. Machine de traitement du lin suivant la revendication 6, caractérisée en ce que le dispositif de concassage fin et de nettoyage des fibres (12) se divise en au moins quatre sections de longueur différente, à savoir dans le sens du flux
a) une section d'introduction (A) avec un diamètre de rotor croissant,
b) une section de concassage fin (a) avec une forme de rotor cylindrique de diamètre supérieur,
c) une section de relâchement (C) avec une forme de rotor cylindrique de diamètre inférieur, et
d) une courte section d'éjection courte (D).

23. Machine de traitement du lin suivant la revendication 22, caractérisée en ce que le rotor dans la section d'introduction (A) présente des ailes plates dans le sens axial (53) avec des bords extérieurs parallèles à l'axe et est entouré par une virole perforée cylindrique (54), sur les surfaces internes de laquelle sont disposées en hélice des nervures directrices (55).

24. Machine de traitement du lin suivant la revendication 22, caractérisée en ce que le rotor dans la section de concassage fin (B) présente des nervures structurées (56) qui s'enroulent en hélice et est entouré d'une fourrure perforée, divisée en plusieurs segments périphériques (57) et maintenue de manière à pouvoir être élargie, sa surface intérieure portant des nervures de friction (58) en forme de parties d'hélice.

25. Machine de traitement du lin suivant la revendication 24, caractérisée en ce que la virole perforée (54) et la fourrure perforée (57) sont en tôle perforée.

26. Machine de traitement du lin suivant la revendication 24, caractérisée en ce que les nervures structurées (56) sont des profilés en tôle en forme de A présentant des ouvertures (59, 60) réparties au hasard, des creux et des bossages, un striage ou des moyens analogues sur les flancs et sur le peigne.

27. Machine de traitement du lin suivant la revendication 24, caractérisée en ce que le couple de freinage de la section de rotor (B) concernée est mesuré et la force de compression agissant sur les segments (57) de la fourrure perforée est commandée en fonction de ce couple.

28. Machine de traitement du lin suivant la revendication 22, caractérisée en ce que le rotor dans la section de relâchement (C) présente des dents d'éjection radiales (61) disposées en hélice et est fermé vers le bas par un crible de fond cylindrique coaxial (62) qui se compose d'une toile métallique diagonale sur le côté intérieur duquel sont montées des nervures de déviation en forme de parties d'hélice (63), et qu'au-dessus est créé un espace de tourbillonnement allant en s'élargissant vers le haut.

29. Machine de traitement du lin suivant la revendication 22, caractérisée en ce que le rotor dans la dernière section d'éjection (D) comporte des aubes d'éjection (67), qui sont entourées par des pièces de carter et qui éjectent les fibres du dispositif (12) dans une direction radiale.

30. Machine de traitement du lin suivant la revendication 22, caractérisée en ce que le rotor est divisé en particulier entre la section de concassage fin (B) et la section de relâchement (C) et les rotors partiels tournent à des vitesses de rotation différentes.

31. Machine de traitement du lin suivant la revendication 6, caractérisée en ce que le dispositif de concassage fin et de nettoyage des fibres est scindé en des dispositifs partiels qui travaillent en série et sont disposés en parallèle l'un à l'autre.

32. Machine de traitement du lin suivant la revendication 28, caractérisée en ce qu'un peigne de freinage (66), entre les dents duquel passent les dents d'éjection (61), est agencé de manière à pouvoir être inséré radialement dans le fond perforé (62) de la section de relâchement (C).

33. Machine de traitement du lin suivant la revendication 6, caractérisée en ce que de préférence en dessous des concasseurs (10, 11) et du dispositif de concassage fin et de nettoyage des fibres (12) sont prévus les dispositifs d'évacuation (27, 28) pour les poussières et résidus de fibres produits.

34. Machine de traitement du lin suivant la revendication 6, caractérisée en ce qu'un dispositif de transfert (29, 30, 70), qui amène les fibres éjectées à un dispositif collecteur, se raccorde au dispositif de concassage fin et de nettoyage des fibres (12).

35. Machine de traitement du lin suivant la revendication 34, caractérisée en ce que le dispositif collecteur est une presse-balles (22), en particulier une presse mécanique comprenant un conduit de pression droit.

36. Machine de traitement du lin suivant la revendication 6, caractérisée en ce que les concasseurs (10, 11) et le dispositif de concassage fin et de nettoyage des fibres (12) au moins sont tous montés dans leurs propres bâtis (69) et par conséquent, sont conçus comme des modules et sont fixés dans la machine de manière à pouvoir être facilement remplacés.

37. Machine de traitement du lin suivant la revendication 36, caractérisée en ce qu'un bâti de support en forme de tunnel (2), accessible aux deux extrémités est prévu, dans lequel les modules peuvent être introduits et dans lequel ils peuvent être fixés (33) dans une disposition en série.

38. Machine de traitement du lin suivant la revendication 37, caractérisée en ce que le conduit de pression (24) d'une presse-balles (22) est disposé dans le sens longitudinal au-dessus du bâti de support (2) et présente, de manière connue un conduit de chargement (26) débouchant au niveau du fond, que le dispositif de transfert comprend une bande transporteuse (30) disposée au-dessus du dispositif de concassage fin et de nettoyage de fibres (12), qui recueille les fibres éjectées vers le haut et les accumule sur une grille d'enlèvement (31) et que la grille d'enlèvement (31) est disposée à l'entrée du conduit de chargement (26) dans la zone du dispositif de ramassage (25).

39. Machine de traitement du lin suivant la revendication 37, caractérisée en ce que les modules sont suspendus dans des rails supérieurs (6) dépassant aux deux extrémités.

40. Machine de traitement du lin mobile suivant l'une quelconque des revendications précédentes, caractérisée en ce qu'un ramasseur d'andains (16), un dispositif d'arrachage ou un dispositif de fauchage, est prévu.

41. Machine de traitement du lin suivant la revendication 40, caractérisée en ce qu'un mécanisme de battage du lin est prévu dans tous les cas dans le flux en amont du dispositif de chargement et de retenue (13).

42. Machine de traitement du lin mobile suivant la revendication 41, caractérisée en ce que le mécanisme de battage comporte un dispositif de nettoyage à crible et une trémie à graines avec des moyens de remplissage et de vidange.

43. Machine de traitement du lin mobile suivant la revendication 40, caractérisée en ce qu'un train de roulement (1) est prévu.

44. Machine de traitement du lin mobile suivant la revendication 40, caractérisée en ce que la cabine du conducteur (7) est placée sur les rails dépassant vers l'avant (6) du bâti de support (2).
